(19) Europäisches Patentamt
European Patent Office
Office européen des brevets

(11) EP 1 544 269 A1

(12) EUROPEAN PATENT APPLICATION
published in accordance with Art. 158(3) EPC

(43) Date of publication:
**22.06.2005 Bulletin 2005/25**

(21) Application number: **04727687.8**

(22) Date of filing: **15.04.2004**

(51) Int Cl.[7]: **C09D 185/00**, B01J 35/02, B01J 21/08, C01G 23/047, B32B 5/14, B32B 27/18, B32B 9/00

(86) International application number:
**PCT/JP2004/005349**

(87) International publication number:
**WO 2004/096935 (11.11.2004 Gazette 2004/46)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **30.04.2003 JP 2003125146**

(71) Applicant: **Ube Nitto Kasei Co., Ltd.**
**Tokyo 103-0004 (JP)**

(72) Inventors:
- **TANAKA, Naoki, c/o Ube Nitto Kasei Co., Ltd. Gifu-shi, Gifu 500-8386 (JP)**
- **SUZUKI, Hirokazu, c/o Ube Nitto Kasei Co., Ltd. Gifu-shi, Gifu 500-8386 (JP)**
- **KOIKE, Tadashi, c/o Ube Nitto Kasei Co., Ltd. Gifu-shi, Gifu 500-8386 (JP)**

(74) Representative: **Albrecht, Thomas, Dr.**
**Kraus & Weisert,**
**Thomas-Wimmer-Ring 15**
**80539 München (DE)**

# (54) PHOTOCATALYST COATING LIQUID, PHOTOCATALYST FILM AND PHOTOCATALYST MEMBER

(57) The present invention relates to a photocatalyst coating liquid capable of forming on an organic substrate a photocatalyst film that is excellent in photocatalytic functions such as super-hydrophilic nature and the performance of maintaining super-hydrophilic nature in a dark place and that has excellent durability, the photocatalyst coating liquid being excellent in stability, and a photocatalyst film formed therefrom, and there are provided a photocatalyst coating liquid comprising (A) titanium oxide fine particles formed of anatase type crystal, (B) colloidal silica and (C) a binder formed of a hydrolysis-condensate of a titanium alkoxide, and having, based on the total solid content, a component (A) content of 5 to 50 mass%, a component (B) content, as a solid content, of 25 to 75 mass% and a component (C) content, as a $TiO_2$ slid content, of 10 to 55 mass%, and a photocatalyst film formed from the above coating liquid.

EP 1 544 269 A1

## Description

### Technical Field

The present invention relates to a photocatalyst coating liquid, a photocatalyst film and a photocatalyst member. More specifically, the present invention relates to a photocatalyst coating liquid that is excellent in photocatalytic functions such as super-hydrophilic nature, the performance of maintaining super-hydrophilic nature in a dark place, etc., that can form on an organic substrate a photocatalyst film having excellent durability capable of maintaining these functions for a long period of time and that is excellent in stability, a photocatalyst film that is formed therefrom and has the above performances, and a photocatalyst member having the above photocatalyst film on its surface, such as an antifouling film.

### Technical Background

When irradiated with light having energy of a band gap or higher, a photocatalytically active material (to be sometimes simply referred to as "photocatalyst" hereinafter) is excited, electrons are generated in a conduction band, and holes are generated in a valence band. And, it is known that the generated electrons reduce surface oxygen to generate super oxide anions ($\cdot O^{2-}$), that the holes oxidize surface hydroxyl groups to generate hydroxy radicals ($\cdot OH$), and that these reactive activated oxygen species exhibit a strong oxidative decomposition function and highly efficiently decompose organic substances adhering to the photocatalyst surface.

Studies are being made of the application of the above functions of the photocatalyst, for example, to deodorization, antifouling, antibacterial protection and sterilization and further to decomposition and removal of those various substances in waste water or waste gas which are problems to cause environmental pollution.

As another function of the photocatalyst, further, it is known that a photocatalyst surface exhibits super-hydrophilic nature in which the contact angle thereof to water is 10° or less when the photocatalyst is optically excited (for example, see International Patent Publication No. 96/29375). Studies are being made of the application of the above super-hydrophilic function of the photocatalyst to the prevention of the fouling caused, for example, on sound insulation walls along an expressway, illumination lamps in a tunnel, street lights, etc., by soot, etc., contained in emission gases from automobiles or the use of the photocatalyst for a film for a body coating or side-view mirror of an automobile or for a defogging or self-cleaning window mirror.

As the above photocatalyst, various compounds having semiconductor properties are known, and among these are metal oxides such as titanium dioxide, iron oxide, tungsten oxide and zinc oxide and metal sulfides such as cadmium sulfide and zinc sulfide. Of these, titanium oxide, particularly anatase type titanium dioxide, is useful as a practical photocatalyst. This titanium dioxide exhibits excellent photocatalytic activity by absorption of light having a specific wavelength in the ultraviolet region included in ordinary light such as sunlight.

When a photocatalyst layer is formed on an organic substrate such as a plastic substrate, there is caused a problem that the organic substrate inevitably deteriorates in a short period of time when the photocatalyst is directly coated thereon. In a photocatalyst film having a photocatalyst layer, for example, on a plastic film, therefore, an intermediate layer is generally formed for preventing the deterioration caused on the substrate film by photocatalytic activity and for preventing improving adhesion to the substrate film. As the above intermediate film, there is generally employed an approximately several μm thick film made of a silicone resin, an acryl-modified silicone resin, or the like.

However, the above intermediate layer has a problem that it is poor in persistence of capability of preventing the deterioration of the organic substrate, so that it is liable to deteriorate for a short period of time.

On the other hand, the present inventors have proposed an organic-inorganic composite graded material having a composition that continuously changes in the thickness direction, which material is useful as a novel functional material in the fields, for example, of a coating film, an adhesive between an organic material and an inorganic or metallic material, an intermediate film that is formed between an organic substrate and a photocatalyst film and that prevents the deterioration of the organic substrate and an intermediate film that improves the adhesion of an organic substrate and an inorganic or metallic material (for example, see JP-A-2000-336281).

The above organic-inorganic composite graded material is an organic-inorganic composite material containing a chemical-bonding product of an organic polymer compound and a metallic compound and has a components-gradient structure in which the content of the above metallic compound continuously changes in the material thickness direction, and it is a novel material useful in the above various fields.

The method for forming a photocatalyst layer on a substrate is selected, for example, from a PVD method (physical gaseous-phase deposition method) such as a vacuum vapor deposition method or a sputtering method, a dry method such as a metal spraying method or a wet method using a coating liquid. When the substrate is an organic substrate, it is undesirable in many cases to employ the dry method for the formation of a photocatalyst layer in view of heat resistance thereof, and it is general practice to employ the wet method using a coating liquid.

In the wet method using a coating liquid, generally, there is employed a method in which a coating liquid that is a dispersion containing a photocatalytically active material and an optional photocatalyst promoter or inorganic binder in a suitable solvent is prepared, the coating liquid is applied to a substrate, and the applied coating liquid is dried to form a photocatalyst layer.
As a binder in the above coating liquid, for example, there is disclosed a hydrolysis product of a hydrolyzable silicon compound such as alkoxysilane (for example, see JP-A-2000-86938 and JP-A-2000-146283).
However, the photocatalyst layer using the above binder has the following problem. It is poor in water resistance, silica as a binder is eluted due to water, titanium oxide particles as a photocatalyst are accordingly likely to come off, and as a result, the photocatalytic function decreases.
Further, there is disclosed a method in which a coating liquid containing a titanium oxide sol that is formed by hydrolysis and condensation of a hydrolyzable titanium compound and of which the reaction is not completed and oxide fine particles whose reaction is completed such as titanium oxide fine particles or colloidal silica is coated on a substrate surface to form a coating film and the coating film is calcined at 250 to 850°C to form a photocatalyst layer (for example, see Japanese Patent No. 3317668). However, this method has a problem that since a high calcining temperature is required for combusting nitrocellulose used as a thickener component, it is difficult to form a photocatalyst layer on an organic substrate. For example, when the coating film is heat-treated at a temperature of 200°C or lower for forming a photocatalyst layer on an organic substrate, a large amount of the thickener component remains in the coating film, and no dry film can be obtained. As a result, tacking is caused, and it is not expected that sufficient film strength can be obtained.
Further, there is disclosed a photocatalyst structure having a photocatalyst film formed from a coating liquid containing titanium oxide sol and stabilized titanium alkoxide, the photocatalyst film being formed on the surface of a heat-resistant substrate (for example, see JP-A-9-248467). In this case, the photocatalyst film is formed of a titanium compound alone, so that there is a problem that the photocatalyst exhibits almost no super-hydrophilic-nature-maintaining performance when maintained in a dark place, which performance is required as a self-cleaning material. Further, as a stabilizer for the titanium alkoxide, chelate-ring-forming glycols or β-diketones are used, and for forming the photocatalyst film, a formed film is calcined at a temperature of 350 to 750°C. When a coating film is heat-treated at the heat-durable temperature of the above substrate or lower (e.g., 200°C or lower) for forming a photocatalyst film on an organic substrate, there is caused a problem that the above stabilizer remains in the photocatalyst film and has a detrimental effect on the function and other properties of the above photocatalyst film.
JP-A-10-237353 discloses a hydrophilic coating agent containing an amorphous titanium oxide, a silicon oxide and a photocatalyst. This amorphous titanium oxide substantially refers to amorphous titanium peroxide $TiO_3$, which is crystallized at a relatively low temperature of approximately 100°C and is easily converted to an anatase type titanium oxide.
Further, when it is attempted to disperse a sol of the above hydrophilic coating agent in an organic solvent for forming a photocatalyst film on various organic substrates, the sol immediately aggregates, so that no uniform or smooth film can be obtained even when a film is formed therefrom. It is therefore required to use a substantially aqueous system as a dispersing agent for the above hydrophilic coating agent. However, an obtained coating liquid itself has high surface energy, so that the quality of the material to be coated is limited, and particularly, it is required to pre-treat a substrate having relatively low surface energy such as various organic substrates. It is hence expected that the above hydrophilic coating agent lacks versatility.

## Disclosure of the Invention

Under the circumstances, it is an object of the present invention to provide a photocatalyst coating liquid that is excellent in photocatalytic functions such as super-hydrophilic nature in particular, the performance of maintaining super-hydrophilic nature in a dark place, etc., that can form on an organic substrate a photocatalyst film having excellent durability capable of maintaining these functions for a long period of time and that is excellent in stability, a photocatalyst film that is formed therefrom and has the above performances, and a photocatalyst member having the above photocatalyst film on its surface.
For achieving the above object, the present inventors have made diligent studies and as a result have found the following. A coating liquid having a specific composition can give a photocatalyst film that has the above performances when a formed film is held at 200°C or lower, the stability thereof is also excellent, and the above object can be achieved by the above coating liquid. The present invention has been completed on the basis of the above finding.
That is, the present invention provides;

(1) a photocatalyst coating liquid comprising (A) titanium oxide fine particles formed of anatase type crystal as a main component, (B) colloidal silica and (C) a binder formed of a hydrolysis-condensate of a titanium alkoxide, and having, based on the total solid content, a component (A) content of 5 to 50 mass%, a component (B) content,

as a solid content, of 25 to 75 mass% and a component (C) content, as a $TiO_2$ solid content, of 10 to 55 mass%,
(2) a photocatalyst coating liquid as recited in the above (1), which comprises, as a solvent, an ethylene glycol monoalkyl ether or a mixture of ethylene glycol monoalkyl ether with a monoalcohol having 4 carbon atoms or less,
(3) a photocatalyst coating liquid as recited in the above (2), which comprises, as a solvent, the ethylene glycol monoalkyl ether and the monoalcohol having 4 carbon atoms or less in a mass ratio of 10:0 to 4:6,
(4) a photocatalyst film formed from the photocatalyst coating liquid recited in any one of the above (1) to (3),
(5) a photocatalyst film as recited in the above (4), which is formed by holding a coating film formed from the photocatalyst coating liquid on an organic substrate, at a temperature of 200°C or lower,
(6) a photocatalyst film as recited in the above (5), which is formed on an intermediate layer on an organic substrate,
(7) a photocatalyst film as recited in the above (6), wherein the intermediate layer is an organic-inorganic composite graded film, and
(8) a photocatalyst member having the photocatalyst film recited in any one of the above (4) to (7) on a surface thereof.

According to the present invention, there can be provided a photocatalyst coating liquid that is excellent in photocatalytic functions such as super-hydrophilic nature, the performance of maintaining super-hydrophilic nature in a dark place, etc., that can form on an organic substrate a photocatalyst film having excellent durability capable of maintaining these functions for a long period of time and that is excellent in stability, a photocatalyst film that is formed therefrom and has the above performances, and a photocatalyst member having the above photocatalyst film on its surface.

Preferred Embodiments of the Invention

The photocatalyst coating liquid of the present invention is a coating liquid comprising (A) titanium oxide fine particles formed of anatase type crystal as a main component, (B) colloidal silica and (C) a binder formed of a hydrolysis-condensate of a titanium alkoxide.

Titanium oxide fine particles formed of anatase type crystal as a main component (to be sometimes referred to "anatase crystal titanium oxide particles" hereinafter) as the above component (A) are photocatalyst particles, and they may contain a small amount of a rutile crystal. Further, there may be also used visible light response type photocatalyst particles that partially contain titanium nitride, lower-order titanium oxide, or the like. The average particle diameter of the above anatase type titanium oxide particles is preferably in the range of 1 to 500 nm, more preferably in the range of 1 to 100 nm, and it is the most preferably in the range of 1 to 50 nm for attaining excellent photocatalytic functions. The above average particle diameter can be measured by a scattering method using laser beam.

Further, it is preferred to incorporate, as a second component, at least one metal selected from V, Fe, Co, Ni, Cu, Zn, Ru, Rh, Pd, Ag, Pt or Au and/or a metal compound thereof so that it/they may be present inside, or on the surface of, each of the above titanium oxide particles, since the titanium oxide particles exhibit still higher photocatalytic functions. Examples of the above metal compound include oxides, hydroxides, oxy-hydroxides, sulfates, halides, nitrates and ions of these metals. The content of the second component is determined as required depending upon kinds of the second component substances.

While the above anatase crystal titanium oxide particles can be produced by a conventionally known method, advantageously, they are used in the form of titanium oxide sol for homogeneously dispersing them in a coating liquid. For producing the above titanium oxide sol, for example, powdery anatase crystal titanium oxide can be deflocculated in the presence of an acid or an alkali, or they can be milled to control their particle diameter. Further, hydrous titanium oxide obtained by thermal decomposition or neutralization decomposition of titanium sulfate or titanium chloride treated by a physical or chemical method to control the crystal diameter or particle diameter. Further, a dispersion stabilizer can be used for providing dispersion stability.

In the photocatalyst coating liquid of the present invention, the colloidal silica as component (B) has the activity of causing the photocatalyst film to exhibit the super-hydrophilic-nature-maintaining performance during holding the photocatalyst film in a dark place.

When exposed to light such as ultraviolet light, a photocatalyst exhibits the property of decomposing an organic substance present on the surface thereof or super-hydrophilic nature. In a dark place, however, these photocatalytic functions are generally not exhibited. In the present invention, however, the photocatalyst film is caused to contain colloidal silica, so that the photocatalyst film exhibits the super-hydrophilic-nature-maintaining performance even in a dark place.

Colloidal silica is a product in the form of colloid, prepared by dispersing high-purity silicon dioxide ($SiO_2$) in an aqueous medium, and it has an average particle diameter generally in the range of 1 to 200 nm, preferably in the range of 5 to 50 nm. Silica sol and hydrolysis condensate of a silicon alkoxide are liable to be eluted with water since their reactions are not completed, and a photocatalyst film containing such is poor in water resistance. On the other

hand, colloidal silica represents reaction-completed fine particles, so that it is not easily eluted with water, and a photocatalyst film containing such is excellent in water resistance.

In the photocatalyst coating liquid of the present invention, the hydrolysis condensate of a titanium alkoxide used as component (C) functions as a water-resistant binder.

As the above titanium alkoxide, there is preferably used a titanium tetraalkoxide whose alkoxyl groups have 1 to 4 carbon atoms each. In this titanium tetraalkoxide, each of four alkoxyl groups may be the same as, or different from, every other, while titanium tetraalkoxide whose alkoxy groups are the same is preferably used in view of easy availability. Examples of the above titanium tetraalkoxide include titanium tetramethoxide, titanium tetraethoxide, titanium tetra-n-propoxide, titanium tetraisopropoxide, titanium tetra-n-butoxide, titanium tetraisobutoxide, titanium tetra-sec-butoxide and titanium tetra-tert-butoxide. These may be used singly or may be used in combination of at least two members of thereof.

In the present invention, the above titanium alkoxide is hydrolyzed and condensed to form a binder. A reaction for the hydrolysis and condensation can be carried out in an organic solvent to be described later, using water in a molar amount that is 0.5 to 4 times, preferably 1 to 3 times as large as the molar amount, for example, of titanium tetraalkoxide, in the presence of an inorganic acid such as hydrochloric acid, sulfuric acid, nitric acid or the like, at a temperature generally in the range of 0 to 70°C, preferably in the range of 20 to 50°C.

The binder formed of hydrolysis condensate of a titanium alkoxide in the present invention has a $TiO_xC_nH_m$ structure containing not a few organic unreacted groups, and it is not easily crystallized at a temperature equivalent to, or lower than, the combustion temperature of an organic substrate. That is, it has an amorphous form at 200°C or lower, and the film does not come to have fragility caused by crystallization, and it is essentially different, for example, from an amorphous titanium oxide formed of titanium peroxide.

In view of coating liquid stability such as the dispersion stability of each particle in the photocatalyst coating liquid of the present invention, the photocatalyst coating liquid preferably contains, as a solvent, ethylene glycol monoalkyl ether or a mixture of ethylene glycol monoalkyl ether with a monoalcohol having 4 carbon atoms or less.

Examples of the above ethylene glycol monoalkyl ether include cellosolve solvents such as ethylene glycol monomethyl ether, ethylene glycol monoethyl ether, ethylene glycol monopropyl ether and ethylene glycol monobutyl ether. These may be used singly or may be used in combination of at least two members thereof.

Further, examples of the monoalcohol having 4 carbon atoms or less, which can be used in combination with the above ethylene glycol monoalkyl ether, include methanol, ethanol, n-propanol, isopropanol, n-butanol, isobutanol, sec-butanol and tert-butanol. These may be used singly or may be used in combination of at least two members thereof.

The above ethylene glycol monoalkyl ether or the above mixture thereof with the monoalcohol having 4 carbon atoms or less can be applied to any substrate without the necessity of selection, and they particularly have excellent wettability to various organic substrates, so that the film can be easily formed.

The coating liquid is liable to cause gelation or the formation of a precipitate, and a problem may be sometimes caused with respect to stability, or transparency may disappear since it turns whitish when the film is formed, so that the weight ratio of the above ethylene glycol monoalkyl ether and the monoalcohol is preferably 10:0 to 4:6.

For preventing the aggregation of the particles added, stabilizing the coating liquid and forming a uniform and smooth film, the photocatalyst coating liquid of the present invention preferably satisfies relational expressions,

$$D>Y>E \quad (a)$$

$$0.019<Y<0.3 \quad (b)$$

$$1<X<14 \quad (c)$$

wherein X is a concentration (mol/liter) of water in the photocatalyst coating liquid and Y is a hydrogen atom concentration (mol/liter) of an inorganic acid, and

further wherein

$$D = 1.46 \times 10^{-2}X^2 - 4.06 \times 10^{-2}X + 3.93 \times 10^{-2}$$

and

$$E = -0.04 \times 10^{-2}X^2 + 1.66 \times 10^{-2}X - 2.88 \times 10^{-2}$$

When X ≥ 14, it is difficult to obtain a uniform and smooth film, and even when X < 14, the coating liquid is sometimes poor in stability when the above relational expressions (a) and (b) are not satisfied.

The method of preparing the photocatalyst coating liquid of the present invention is not critical, and for example, it can be prepared as follows.

First, water in an amount that is, by mole, 0.5 to 4 times, preferably 1 to 3 times as large as a predetermined amount of the titanium alkoxide and a predetermined amount of an inorganic acid are added to an organic solvent that is an ethylene glycol monoalkyl ether or a mixture of an ethylene glycol monoalkyl ether with a monoalcohol having 4 carbon atoms or less, a binder liquid prepared by causing a titanium alkoxide to undergo hydrolysis and condensation is added at a temperature of approximately 0 to 70°C, preferably, 20 to 50°C, then, predetermined amounts of anatase crystal titanium oxide sol and colloidal silica are added, and the mixture is homogeneously dispersed, whereby the photocatalyst coating liquid of the present invention can be prepared.

The thus-prepared photocatalyst coating liquid is applied to a proper substrate by a known method such as a dip coating method, a spin coating method, a spray coating method, a bar (rod) coating method, a knife coating method, a roll coating method, a blade coating method, a die coating method or a gravure coating method, to form a film, and the film is dried naturally or dried under heat, whereby the photocatalyst film of the present invention can be obtained. For the drying under heat, a temperature of 200°C or lower can be employed. As described above, the formed film is then held at a mild temperature condition, whereby the formed photocatalyst film can exhibit sufficient photocatalytic functions, so that the substrate can be suitably selected, for example, not only from inorganic substrates such as ceramic, glass, metal, alloy, etc., but also from organic substrates having poor heat resistance.

Examples of the above organic substrates include acrylic resins such as polymethyl methacrylate, styrene resins such as polystyrene and ABS resin, olefin resins such as polyethylene and polypropylene, polyester resins such as polyethylene terephthalate and polyethylene naphthalate, polyamide resins such as 6-nylon and 6,6-nylon, a polyvinyl chloride resin, a polycarbonate resin, a polyphenylene sulfide resin, a polyphenylene ether resin, a polyimde resin and cellulose resins such as cellulose acetate.

The organic substrate in the present invention includes a substrate having an organic film on a substrate formed of a material other than organic materials, such as a metal material, a glass or ceramic material or any one of other various inorganic materials.

When a photocatalyst film is formed directly on such an organic substrate, the organic substrate deteriorates in a short period of time due to the photocatalytic activity of the photocatalyst film, so that an intermediate film for preventing the deterioration of the organic substrate is generally interposed between the organic substrate and the photocatalyst film. As the above intermediate film, there have been known various intermediate films such as a silicone resin film, an acryl-modified silicone film, an organic-inorganic composite graded film, and the like. In the present invention, an organic-inorganic composite graded film is preferably used in view of adhesion between the organic substrate and the photocatalyst film and the prevention of deterioration of the organic substrate.

The above organic-inorganic composite graded film refers to a film having a components-graded structure in which a composite material formed by chemically bonding an organic polymer compound and a metal oxide compound is contained and the content of the metallic component continuously changes in the thickness direction of the film. The above composite graded film can be formed from a coating agent prepared by hydrolyzing (X) an organic polymer compound whose molecule has a metal-containing group (to be sometimes referred to as "hydrolyzable metal-containing group" hereinafter) that can bond to a metal oxide by hydrolysis and (Y) a metal-containing compound that can form a metal oxide by hydrolysis.

The organic polymer compound having a hydrolyzable metal-containing group as the above component (X) can be obtained, for example, by copolymerizing (a) an ethylenically unsaturated monomer having a hydrolyzable metal-containing group and (b) an ethylenically unsaturated monomer free of any metal.

The above ethylenically unsaturated monomer having a hydrolyzable metal-containing group as the above component (X)(a) includes groups of the general formula (I),

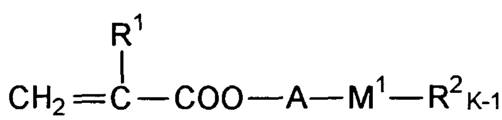

· · · (I)

wherein $R^1$ is a hydrogen atom or methyl, A is an alkylene group, preferably an alkylene group having 1 to 4 carbon atoms, $R^2$ stands for hydrolyzable or non-hydrolyzable group(s), provided that at least one of them is required

to be a hydrolyzable group that can be chemically bonded to the component (Y) by hydrolysis and that when a plurality of $R^2$s are present, each $R^2$ may be the same as, or different from, other or every other, $M^1$ is a metal atom such as silicon, titanium, zirconium, indium, tin, aluminum, or the like, and k is a valence of the metal atom $M^1$.

In the above general formula (I), the hydrolyzable group that is represented by $R^2$ and can be chemically bonded to the component (Y) by hydrolysis preferably includes, for example, an alkoxyl group, an isocyanate group, halogen atoms such as a chlorine atom, an oxyhalogen group, an acetyl acetonate group and a hydroxyl group, and the non-hydrolyzable group that is not chemically bonded to the component (Y) preferably includes, for example, a lower alkyl group.

Examples of the metal-containing group represented by $-M^1R^2_{k-1}$ in the general formula (I) include trimethoxysilyl, triethoxysilyl, tri-n-propoxysilyl, triisopropoxysilyl, tri-n-butoxysilyl, triisobutoxysily, tri-sec-butoxysilyl, tri-tert-butoxysilyl, trichlorosilyl, dimethylmethoxysilyl, methyldimethoxysilyl, dimethylchlorosilyl, methyldichlorosilyl, triisocyanatosilyl, methyldiisocyanatosilyl, etc., and they also include a trimethoxytitanium group, a triethoxytitanium group, a tri-n-propoxytitanium group, a triisopropxytitanium group, tri-n-butoxytitanium group, a triisobutyoxytitanium group, a tri-sec-butoxytitanium group, a tri-tert-butoxytitanium group and a trichlorotitanium group. They further include a trimethoxyzirconium group, a triethoxyzirconium group, a tri-n-propoxyzirconium group, a trisopropoxyzirconium group, a tri-n-butoxyzirconium group, a triisobutoxyzirconium group, a tri-sec-butoxyzirconium group, a tri-tert-butoxyzirconium group and a trichlorozirconium group, and they furthermore include a dimethoxyaluminum group, a diethoxyaluminum group, a di-n-propoxyaluminum group, a diisopropoxyaluminum group, a di-n-butoxyaluminum group, a diisobutoxyaluminum group, di-sec-butoxyaluminum group, a di-tert-butoxyaluminum group and a trichloroaluminum group.

The above ethylenically unsaturated monomers as component (a) may be used singly or may be used in combination of at least two members thereof.

The ethylenically unsaturated monomer free of any metal as the above component (b) includes, for example, an ethylenically unsaturated monomer of the general formula (II),

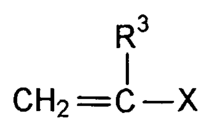

· · · (II)

wherein $R^3$ is a hydrogen atom or methyl and X is a monovalent organic group,
preferably, an ethylenically unsaturated monomer of the general formula (II-a)

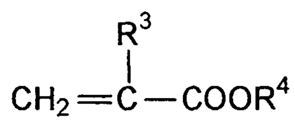

· · · (II-a)

wherein $R^3$ is as defined above and $R^4$ is a hydrocarbon group,
or a mixture of the ethylenically unsaturated monomer of the above general formula (II-a) with an ethylenically unsaturated monomer of the general formula (II-b) as an adhesion improving agent which is added as required,

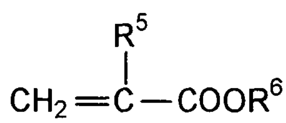

· · · (II-b)

wherein $R^5$ is a hydrogen atom or methyl, $R^6$ is a hydrocarbon group having an epoxy group, a halogen atom or an ether bond.

In the ethylenically unsaturated monomer of the above general formula (II-a), the hydrocarbon group represented by $R^4$ includes a linear or branched alkyl group having 1 to 10 carbon atoms, a cycloalkyl group having 3 to 10 carbon atoms, an aryl group having 6 to 10 carbon atoms and an aralkyl group having 7 to 10 carbon atoms. Examples of the alkyl group having 1 to 10 carbon atoms include methyl, ethyl, n-propyl, isopropyl and various types of butyl, pentyl, hexyl, octyl and decyl. Examples of the cycloalkyl group having 3 to 10 carbon atoms include cyclopentyl, cyclohexyl, methylcyclohexyl and cyclooctyl, examples of the aryl group having 6 to 10 carbon atoms include phenyl, tolyl, xylyl, naphthyl and methylnaphthyl, and examples of the aralkyl group having 7 to 10 carbon atoms include benzyl, methylbenzyl, phenethyl and naphthylmethyl.

Examples of the ethylenically unsaturated monomer of the above general formula (II-a) include methyl (meth) acrylate, ethyl (meth)acrylate, propyl (meth)acrylate, butyl (meth)acrylate, hexyl (meth)acrylate, 2-ethylhexyl (meth) acrylate, cyclohexyl (meth)acrylate, phenyl (meth)acrylate and benzyl (meth)acrylate. These may be used singly or may be used in combination of at least two members thereof.

In the ethylenically unsaturated monomer of the above general formula (II-a), the hydrocarbon group having an epoxy group, a halogen atom or an ether bond, represented by $R^6$, preferably includes a linear or branched alkyl group having 1 to 10 carbon atoms, a cycloalkyl group having 3 to 10 carbon atoms, an aryl group having 6 to 10 carbon atoms and an aralkyl group having 7 to 10 carbon atoms. The halogen atom as the above substituent preferably includes a chlorine atom and a bromine atom. Specific examples of the above hydrocarbon group include those that are given in the explanation of $R^4$ in the above general formula (II-a).

Examples of the ethylenically unsaturated monomer of the above general formula (II-b) preferably include glycidyl (meth)acrylate, 3-glycidoxypropyl (meth)acrylate, 2-(3,4-epoxycyclohexyl)ethyl (meth)acrylate, 2-chloroethyl (meth)acrylate and 2-bromoethyl (meth)acrylate.

In addition to these, as an ethylenically unsaturated monomer of the above general formula (II), there can be used styrene, α-methylstyrene, α-acetoxystyrene, m-, o- or p-bromostyrene, m-, o- or p-chlorostyrene, m-, o- or p-vinylphenol, 1- or 2-vinylnaphthalene, etc., and further, there can be also used a stabilizer having an ethylenically unsaturated group for a polymerizable polymer, such as an antioxidant, an ultraviolet absorbent or a photo-stabilizer having an ethylenically unsaturated group. These may be used singly or may be used in combination of at least two members thereof.

Further, when the ethylenically unsaturated monomer of the general formula (II-a) and the ethylenically unsaturated monomer of the general formula (II-b) are used in combination, preferably, the latter ethylenically unsaturated monomer is used in an amount of 1 to 100 mol% based on the former ethylenically unsaturated monomer.

The above ethylenically unsaturated monomer having a hydrolyzable metal-containing group as component (a) and the above ethylenically unsaturated monomer free of any metal as component (b) are radical copolymerized in the presence of a radical polymerization initiator, whereby the organic polymer compound having a hydrolyzable metal-containing group as component (X) can be obtained.

On the other hand, as the metal-containing compound that can form a metal oxide by hydrolysis (hydrolyzable metal-containing compound), as component (Y), there is used a compound of the general formula (III),

$$R^{7}_{m-n}M^{2}R^{8}n \qquad \text{(III)}$$

wherein $R^7$ is a non-hydrolyzable group, $R^8$ is a hydrolyzable group, $M^2$ is a metal atom, m is a valence of the metal atom $M^2$ and n is an integer that satisfies the relationship of $0<n\leq m$,

or a condensation oligomer thereof.

In the above general formula (III), when a plurality of $R^7$s are present, each of the plurality of $R^7$s may be the same as, or different from, other or every other one, and when a plurality of $R^8$s are present, each of the plurality of $R^8$s may be the same as, or different from, other or every other one. Examples of the non-hydrolyzable group represented by $R^7$ preferably include an alkyl group, an aryl group and an alkenyl group, and examples of the hydrolyzable group represented by $R^8$ include a hydroxyl group, an alkoxyl group, an isocyanate group, halogen atoms such as a chlorine atom, etc., an oxyhalogen group and an acetylacetonate group. Examples of the metal atom represented by $M^2$ include silicon, titanium, zirconium, indium, tin and aluminum.

Examples of the compound of the above general formula (III) or the condensation oligomer thereof include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, etc., and tetraalkoxytitanium and tetraalkoxyzirconium corresponding thereto. Further, they include metal alkoxides such as trimethoxyaluminum, triethoxyaluminum, tri-n-propoxyaluminum, triisopropoxyaluminum, tri-n-butoxyaluminum, triisobutoxyaluminum, tri-sec-butoxyaluminum, tri-tert-butoxyaluminum, or metal alkoxide oligomers such as "Methyl Silicate 51" and "Ethyl Silicate 40" (these are all trade names of Colcoat Corp.) and "MS-51" and "MS-56" (these are all trade names of Mitsubishi Chemical Corporation) which are commercially available alkoxysilane oligomers, and they further include tetraisocyanatosilane, methyltriisocyanatosilane, tetrachlorosilane and methyltrichlorosilane. Alkoxides of metals are preferred as component (Y).

In the present invention, these hydrolyzable metal-containing compounds may be used singly or may be used in combination of at least two members thereof.

In the present invention, a mixture of the above organic polymer compound as component (X) and at least one hydrolyzable metal-containing compound as component (Y) is hydrolyzed in a proper polar solvent such as an alcohol, a ketone or an ether in the presence of an acid such as hydrochloric acid, sulfuric acid, nitric acid, or the like or a cation exchange resin as a solid acid, at a temperature, generally, of 0 to 100°C, preferably 20 to 60°C. When the

solid acid is used, it is removed, and further, the solvent is distilled off, or a solvent is added, as required, to adjust the hydrolysis product to a viscosity suitable for application, whereby a coating agent formed of the coating liquid is prepared. When the above temperature is too low, the hydrolysis does not proceed. When it is too high, the reaction for the hydrolysis and polymerization proceeds too fast, and the reaction is difficult to control. As a result, the gradient of the thus-obtained graded coating film may decrease.

After the coating liquid is prepared, some inorganic components sometimes gradually proceed with hydrolysis and polycondensation to change application conditions, so that a solid dehydrating agent insoluble in the coating liquid, such as anhydrous magnesium sulfate, or the like is added, which prevents the pot life thereof from decreasing. In this case, the coating liquid is used for application after the above dehydrating agent is removed.

Then, the thus-obtained coating liquid is applied to an organic substrate surface such that a dry coating film having an average thickness in the range of 40 to 300 nm is formed, by known means such as a dip coating method, a spin coating method, a spray coating method, a bar coating method, a knife coating method, a roll coating method, a blade coating method, a die coating method or a gravure coating method, to form a coating film, and the coating film is dried by known drying, for example, under heat at a temperature of approximately 40 to 150°C, whereby a desired organic-inorganic composite graded film is formed.

When the average thickness of the above composite graded film is less than 40 nm, the composite graded film does not fully exhibit the function of an intermediate film. When it exceeds 300 nm, a cracking, etc., may take place.

In the thus-formed organic-inorganic composite graded film, the content of metal component of the composite film in the surface layer thereof is almost 100 %, and the above content gradually decreases toward the substrate and comes to be almost 0 % in the vicinity of the substrate. That is, in the above organic-inorganic composite graded film, substantially, a surface in contact with the organic substrate is formed of an organic polymer compound component alone, and the other open surface is formed of a metal oxide compound component alone.

In the present invention, the previously described photocatalyst coating liquid of the present invention is applied onto the thus-formed organic-inorganic composite graded film to form a film, and the film is held at a temperature of 200°C or lower, whereby a photocatalyst film can be formed. The thickness of the photocatalyst film is generally determined to be in the range of 10 nm to 5 μm. When this thickness is less than 10 nm, no sufficient photocatalytic functions are exhibited. When it exceeds 5 μm, there is observed almost no further effect on improvement of photocatalytic functions for such a thickness, and it may rather cause a cracking. The thickness is preferably 30 nm to 3 μm, particularly preferably in the range of 30 nm to 1 μm.

The thus-formed photocatalyst film of the present invention is excellent particularly in photocatalytic functions such as super-hydrophilic nature and the performance of maintaining hydrophilic nature in a dark place and has good water resistance and mechanical strength, and it has excellent durability capable of maintaining the above functions for a long period of time.

The present invention also provides a photocatalyst member having the above photocatalyst film on its surface. This photocatalyst member is not specially limited in form, and the form may be any one, for example, of a film, a sheet, a plate and structures of other various forms. The photocatalyst member is suitably used as an antifouling member in various use fields.

When the photocatalyst member of the present invention has the form of a film, it is attached, for example, to bodies, window glass and mirrors of various transport means such as an automobile, a train, a ship, etc., architectural structures such as a house, a building, an apartment, etc., various windows including a skylight and an abat-jour, various cover glasses for a show window and an automatic dispenser of a store, a surveillance camera, a solar cell, load illumination, an airport taxiway lamp, etc., a transparent wall, a stained glass window, a sign-post or an expressway toll, gate directions and a time table of public transport, various signs such as directional signs or arrows of various assembly halls or facilities, internally lightenable traffic signs, LED traffic signs, directional signs, etc., internally lightenable installation type store signboards, internally lightenable movable store signboards, various side signboards, various self-standing signboards such as a station-standing signboard, a field-standing signboard and a roadside, various signboards such as an EL display signboard, an LED signboard, a tent signboard, a neon signboard and an electric pole signboard, various light reflectors such as a light reflector for a road, a reflecting pole for a road, etc., a sound insulating board in an expressway, etc., a carport, a wind and rain shelter, a terrace cover, an automobile mirror, a curved mirror, a shower room mirror, various labels and stickers, various coated board and an inside of a freezer storage or cold storage showcase or greenhouse, whereby the photocatalyst member exhibits effects that the fouling of an object to which it is attached is prevented, that the adherence of water drops is prevented, that the object is improved in visibility, that snow slidability is imparted, that a trace harmful substance in a space inside is decomposed and that the scattering of glass pieces is prevented when a glass is broken.

Further, by utilizing the antibacterial function, it can be used as a wrapping film for food packaging or can be applied to an internal surface of a plastic container that is for containing drinking water.

Examples

The present invention will be explained more in detail hereinafter with reference to Examples, while the present invention shall not be limited by these Examples.

Photocatalyst films obtained in Examples were evaluated for performances according to the following methods.

(1) Stability of coating liquid

The appearance of a coating liquid one week after the preparation thereof was visually evaluated as follows.

○: Transparency is retained. X: A coating liquid has gelled or formed a precipitate to be opaque.

(2) Film formability

Film formability of a formed photocatalyst film was visually observed and evaluated as follows.

○: A film retains transparency and is excellent.
X: A film is whitish and cloudy.

(3) Test for confirming hydrophilic-nature maintaining-performance by contact angle of less than 10 degrees in a dark place

A sample that had been irradiated with ultraviolet light to fully exhibit super-hydrophilic nature was stored in a dark place, and it was taken out at intervals of a predetermined time period and measured with a water contact angle meter [with water contact angle measuring apparatus "G-1-1000" supplied by ERMA Inc. at a temperature of 25°C and a humidity of 50 %]. A case when the contact angle was less than 10 degrees was taken as an exhibition period of super-hydrophilic-nature-maintaining performance, and the number of days required before the contact angle exceeded 10 degrees was taken as the number of days of super-hydrophilic-nature maintenance.

(4) Measurement for rate of attaining hydrophilicity

After the test in (3) was carried out, a sample of which the contact angle exceeded 20° was irradiated with ultraviolet light at 1 $mW/cm^2$, reciprocal numbers (1/deg) of contact angles that the sample showed at each time according to time periods of the irradiation with ultraviolet light were plotted, and a gradient thereof was taken as a constant of rate of attaining hydrophilicity, to determine a rate of attaining hydrophilicity.

(5) Pencil hardness test

According to JIS K5400, a pencil scratching test was carried out under a load of 100 g. When a film was tested five times as a total and was damaged three times, a hardness that was one rank below a pencil hardness was taken as a hardness of the coating film.

(6) Coating film durability test

By means of a carbon arc sunshine weatherometer tester [tester: sunshine weatherometer "S300", supplied by Suga Test Instruments Co.,Ltd.] according to JIS K 7350, an acceleration test (cycle: one cycle of 2 hours including irradiation for 102 minutes and irradiation + rain for 18 minutes, black panel temperature: 63 ±3°C, relative humidity: 55 ±5 %) was carried out for 300 hours, the amounts of titanium atoms and silicon atoms were determined on the basis of intensity values obtained by fluorescence X ray measurements [Rigaku ZSX100e, X ray tube Rh, tube voltage 50 kV, tube current 60 mA] before and after the climate resistance test, and decrements of the atoms were calculated on the basis of differences in intensity values, to evaluate the coating film for durability. That is, the lower the decrement, the higher the durability of the coating film.

Preparation Example 1

Preparation of organic-inorganic composite graded film

0.1 Gram of 2,2'-azobisisobutyronitrile was dissolved in a mixture of 10.9 g of methyl methacrylate with 1.36 g of γ-methacryloxypropyltrimethoxysilane, and then the mixture was allowed to react at 75°C for 3 hours with stirring, to give a copolymer having a weight average molecular weight, as a polystyrene according to a gel permeation chromatography (GPC) method, of approximately 70,000. 1.0 Grams of the copolymer was dissolved in 100 ml of methyl isobutyl ketone to give an organic component solution having a concentration of 10 g/liter.

A mixture solution containing 1.68 g (0.016 mol) of a 60 mass% nitric acid aqueous solution, 0.61 g (0.034 mol) of water and 7.8 g (0.087 mol) of ethyl cellosolve was gradually dropwise added to a solution of 10.0 g (0.036 mol) of titanium tetraisopropoxide in 19.9 g (0.221 mol) of ethyl cellosolve with stirring, and then the mixture was stirred at 30°C for 4 hours, to give an inorganic component solution.

To 20 ml of methyl isobutyl ketone was added 5 ml of the organic component solution, then, 16.7 ml of ethyl cellosolve was added, and then 8.8 ml of the organic component solution was added, to obtain a components-graded film coating liquid. The coating liquid was bar-coated on a 50 μm thick polyethylene terephthalate (PET) film ("Tetlon HB-3" supplied by Teijin-Du Pont Film Corp.) with a Mayer bar, and the solvent was volatilized, to give a film with a 100 nm thick organic-inorganic composite graded film.

Preparation Example 2

Preparation of binder solution

A mixture solution containing 1.68 g (0.016 mol) of a 60 mass% nitric acid aqueous solution, 0.61 g (0.034 mol) of water and 7.80 g (0.087 mol) of ethyl cellosolve was gradually dropwise added to a solution of 10.00 g (0.035 mol) of titanium tetraisopropoxide in 19.90 g (0.221 mol) of ethyl cellosolve with stirring, and then the mixture was stirred at 30°C for 4 hours. Then, 77.60 g (0.863 mol) of ethyl cellosolve was added, to prepare a binder solution having a solid content, as $TiO_2$, of 2.38 mass%.

In this case, the water in the binder solution had an amount of 1.28 g as a total of water (0.67 g) contained in the 60 mass% nitric acid aqueous solution and added water (0.61 g), and the nitric acid contained in the 60 mass% nitric acid aqueous solution had an amount of 1.01 g.

Example 1

While a mixture of 94.11 g of ethyl cellosolve with 133.59 g of n-propanol was stirred, 44.12 g of the binder solution was added, and then a mixture of 0.81 g of a 60 mass% nitric acid aqueous solution with 20.40 g of water was gradually dropwise added. Then, 1.45 g of a dispersion of anatase type crystal titanium oxide particles ["PC-201" supplied by Titan Kogyo Co,.LTD. solvents: water 77.2 %, nitric acid 2.1 %, solid content 20.7 mass parts, average particle diameter 20 - 40 nm] and 5.50 g of colloidal silica ["Snowtex IPA-ST", supplied by Nissan Chemical Industries, Ltd., solvents: isopropyl alcohol 69.999 mass%, nitric acid 0.001 mass%, solid content 30 mass%, average particle diameter 10 - 20 nm] were consecutively gradually dropwise added thereto, to prepare a photocatalyst coating liquid.

In this case, the amount of water contained in the photocatalyst coating liquid consisted of 0.48 g of water in the binder solution, 0.32 g of water in the 60 mass% nitric acid aqueous solution, 20.4 g of the added water and 1.12 g of water in the dispersion of anatase type titanium oxide particles, and the water had a total amount of 22.32 g and a molar amount of 1.24 mol. Further, the amount of nitric acid consisted of 0.38 g of nitric acid in the binder solution, 0.50 g of nitric acid in the added 60 mass% nitric acid aqueous solution, 0.03 g of nitric acid in the dispersion of anatase type crystal titanium oxide particles and $5.50 \times 10^{-5}$ g of nitric acid in the colloidal silica dispersion, and the nitric acid had a total amount of 0.90 g and a molar amount of $1.43 \times 10^{-2}$ mol. The above-prepared photocatalyst coating liquid had an amount of 300 g and a specific gravity of 0.86, so that the concentration of water was 3.6 mol/liter, and that the nitric acid had a hydrogen atom concentration of $4.1 \times 10^{-2}$ mol/liter.

Then, the above coating liquid was applied onto the graded film of the film with organic-inorganic composite graded film, obtained in Preparation Example 1, with a Mayer bar (rod) to form a film, the solvent was volatilized to form a 45 nm thick photocatalyst coating, whereby a photocatalyst film was obtained.

The thus-obtained photocatalyst film was tested for performances with regard to the pencil hardness test and the test for confirming hydrophilic-nature maintaining-performance by water contact angle of less than 10 degrees in a dark place, and according to the fluorescence X ray analysis of the film that was subjected to the measurement for rate of attaining hydrophilicity and the carbon arc type sunshine weatherometer test for 300 hours, decrements of Ti atoms and Si Atoms were calculated. Table 1 shows amount ratios of the components in the coating liquid, and Table

2 shows the performances. The coating film had excellent durability, and the coating film after the climate resistance test had almost no change in composition.

Examples 2 - 6

Coating liquids were prepared in the same manner as in Example 1 except that the amount ratios of the components in each coating liquid were changed as shown in Table 1, and further, photocatalyst films were formed in the same manner as in Example 1.

Table 1 shows amount ratios of the components in each coating liquid, and Table 2 shows the performances of the photocatalyst films.

The coating films had excellent durability, and the coating films after the climate resistance test had almost no change in composition.

Examples 7 - 9

Coating liquids were prepared in the same manner as in Example 1 except that the amounts of water and the acid to be added were changed and that the concentrations of water and the acid were changed as shown in Table 1. Further, photocatalyst films were formed in the same manner as in Example 1.

Table 1 shows amount ratios of the components in each coating liquid, and Table 2 shows the performances of the photocatalyst films.

The coating liquids were excellent in stability and film formability, and the photocatalyst films had no change in performance.

Comparative Examples 1 - 3

Coating liquids were prepared in the same manner as in Example 1 except that the amounts of the components in each coating liquid were changed as shown in Table 1, and further, photocatalyst films were formed in the same manner as in Example 1.

Table 1 shows properties of each coating liquid, and Table 2 shows performances of the photocatalyst films.

Comparative Example 4

A coating liquid was prepared in the same manner as in Example 1 except that the titanium tetraisopropoxide in Example 1 was replaced with tetraethoxysilane, and further, a photocatalyst film was formed in the same manner as in Example 1. Table 1 shows properties of the coating liquid, and Table 2 shows performances of the photocatalyst film.

The durability of the coating film was NG, and there was a decrease in silica after the climate resistance test, and there was a change in composition.

Comparative Example 5

A coating liquid was prepared in the same manner as in Example 4 except that the colloidal silica in Example 4 was replaced with a partial hydrolysis condensate of tetraalkoxysilane used in Comparative Example 4, and further, a photocatalyst film was formed in the same manner as in Example 4. Table 1 shows properties of the coating liquid, and Table 2 shows performances of the photocatalyst film.

The durability of the coating film was NG, and there was a decrease in silica after the climate resistance test, and there was a change in composition.

Comparative Examples 6 - 9

Coating liquids were prepared in the same manner as in Example 1 except that the amounts of water and the acid to be added were changed and that the concentrations of water and the acid were changed as shown in Table 1. Further, photocatalyst films were formed in the same manner as in Example 1.

Table 1 shows amount ratios of the components in each coating liquid, and Table 2 shows the performances of the photocatalyst films.

The stability or film formability of the coating liquids was NG, and the photocatalyst films were not worth evaluating them for performances.

Table 1

| | | Mass ratio of components in solid content | | | | MR in Solvent*1 | Concentrations of water and acid added | | | |
|---|---|---|---|---|---|---|---|---|---|---|
| | | Com't A *2 | Com't B *3 | Com't C *4 | H of SA *5 | EC/ n-PrOH | X | Y | E | D |
| Example | 1 | 10 | 55 | 35 | — | 5/5 | 3.6 | 0.041 | 0.082 | 0.026 |
| | 2 | 10 | 70 | 20 | — | 5/5 | ditto | ditto | ditto | ditto |
| | 3 | 20 | 45 | 35 | — | 5/5 | ditto | ditto | ditto | ditto |
| | 4 | 30 | 55 | 15 | — | 5/5 | ditto | ditto | ditto | ditto |
| | 5 | 50 | 40 | 10 | — | 5/5 | ditto | ditto | ditto | ditto |
| | 6 | 10 | 55 | 35 | — | 10/0 | ditto | ditto | ditto | ditto |
| | 7 | 10 | 55 | 35 | — | 5/5 | 4.8 | 0.137 | 0.181 | 0.042 |
| | 8 | 10 | 55 | 35 | — | 5/5 | 9.6 | 0.273 | 0.995 | 0.094 |
| | 9 | 10 | 55 | 35 | — | 5/5 | 13.4 | 0.137 | 2.117 | 0.122 |
| Comparative Example | 1 | 70 | 20 | 10 | — | 5/5 | 3.6 | 0.041 | 0.082 | 0.026 |
| | 2 | 10 | 5 | 85 | — | 5/5 | ditto | ditto | ditto | ditto |
| | 3 | 3 | 62 | 35 | — | 5/5 | ditto | ditto | ditto | ditto |
| | 4 | 10 | 55 | — | 35 | 5/5 | ditto | ditto | ditto | ditto |
| | 5 | 30 | — | 15 | 55 | 5/5 | ditto | ditto | ditto | ditto |
| | 6 | 10 | 55 | 35 | — | 5/5 | ditto | 0.137 | ditto | ditto |
| | 7 | 10 | 55 | 35 | — | 5/5 | 9.6 | 0.41 | 0.995 | 0.094 |
| | 8 | 10 | 55 | 35 | — | 5/5 | ditto | 0.048 | ditto | ditto |
| | 9 | 10 | 55 | 35 | — | 5/5 | 15.2 | 0.273 | 2.795 | 0.131 |

*1: Mass ratio of components in solvent
*2: Anatase crystal titanium oxide fine particles
*3: Colloidal silica particles
*4: Hydrolyzate of titanium alkoxide
*5: Hydrolyzate of silicon alkoxide

Table 2

| | | St of cl *1 | F.F. *2 | Number of days *3 | Rate of attaining h.n.*4 | Pencil Hardness | Durability of coating film | |
|---|---|---|---|---|---|---|---|---|
| | | | | | | | D of Ti atoms (%)*6 | D of Si atoms (%)*7 |
| Example | 1 | ○ | ○ | 7 days | 0.010 | H | 0.6 | 1.3 |
| | 2 | ○ | ○ | 14 days | 0.018 | HB | 0.3 | 1.7 |
| | 3 | ○ | ○ | 5 days | 0.015 | H | 0.8 | 1.1 |
| | 4 | ○ | ○ | 14 days | 0.052 | HB | 0.9 | 0.9 |
| | 5 | ○ | ○ | 4 days | 0.089 | B | 1.1 | 0.7 |
| | 6 | ○ | ○ | 7 days | 0.091 | H | 0.5 | 1.0 |
| | 7 | ○ | ○ | 7 days | 0.011 | H | 0.5 | 1.1 |
| | 8 | ○ | ○ | 7 days | 0.010 | H | 0.6 | 1.4 |
| | 9 | ○ | ○ | 7 days | 0.011 | H | 0.6 | 1.3 |
| Comparative Example | 1 | ○ | ○ | 1 day | 0.152 | 3B | 1.9 | 1.1 |
| | 2 | ○ | ○ | — | HN not formed*5 | 3H | 1.8 | 0.3 |
| | 3 | ○ | ○ | 7 days | 0.004 | H | 1.1 | 1.2 |
| | 4 | ○ | ○ | 14 days | 0.014 | B | 0.7 | 34.0 |
| | 5 | ○ | ○ | 14 days | 0.002 | B | 2.1 | 54.0 |
| | 6 | × | — | — | — | — | — | — |
| | 7 | × | — | — | — | — | — | — |
| | 8 | × | — | — | — | — | — | — |
| | 9 | ○ | × | — | — | — | — | — |

*1: Stability of coating liquid
*2: Film formability
*3: Number of days for which super-hydrophilic nature was maintained.
*4: Rate of attaining hydrophilic nature
*5: Hydrophilic nature was not generated.
*6: Decrement of Ti atoms
*7: Decrement of Si atoms

Industrial Utility

According to the photocatalyst coating liquid of the present invention, there can be obtained a photocatalyst film that is excellent in photocatalytic functions such as particularly super-hydrophilic nature and the performance of maintaining super-hydrophilic nature in a dark place, and it can be suitably used as a photocatalyst member such as an antifouling film, or the like.

## Claims

1. A photocatalyst coating liquid comprising (A) titanium oxide fine particles formed of anatase type crystal as a main component, (B) colloidal silica and (C) a binder formed of a hydrolysis-condensate of a titanium alkoxide, and having, based on the total solid content, a component (A) content of 5 to 50 mass%, a component (B) content, as

a solid content, of 25 to 75 mass% and a component (C) content, as a $TiO_2$ slid content, of 10 to 55 mass%.

**2.** The photocatalyst coating liquid of claim 1, which comprises, as a solvent, an ethylene glycol monoalkyl ether or a mixture of ethylene glycol monoalkyl ether with a monoalcohol having 4 carbon atoms or less.

**3.** The photocatalyst coating liquid of claim 2, which comprises, as a solvent, the ethylene glycol monoalkyl ether and the monoalcohol having 4 carbon atoms or less in a mass ratio of 10:0 to 4:6.

**4.** A photocatalyst film formed from the photocatalyst coating liquid recited in any one of claims 1 to 3.

**5.** The photocatalyst film of claim 4, which is formed by holding a coating film formed from the photocatalyst coating liquid on an organic substrate, at a temperature of 200°C or lower.

**6.** The photocatalyst film of claim 5, which is formed on an intermediate layer on an organic substrate.

**7.** The photocatalyst film of claim 6, wherein the intermediate layer is an organic-inorganic composite graded film.

**8.** A photocatalyst member having the photocatalyst film recited in any one of claims 4 to 7 on a surface thereof.

## INTERNATIONAL SEARCH REPORT

International application No.
PCT/JP2004/005349

A. CLASSIFICATION OF SUBJECT MATTER
Int.Cl[7] C09D185/00, B01J35/02, B01J21/08, C01G23/047, B32B5/14, B32B27/18, B32B9/00

According to International Patent Classification (IPC) or to both national classification and IPC

B. FIELDS SEARCHED

Minimum documentation searched (classification system followed by classification symbols)
Int.Cl[7] C09D1/00-C09D201/10, B01J35/00-B01J35/12, B01J21/00-B01J21/20, C01G23/00-C01G23/08, B32B1/00-B32B35/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2004 |

Electronic data base consulted during the international search (name of data base and, where practicable, search terms used)
WPI/L(QUESTEL), JICST(JOIS)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 11-269414 A (Central Glass Co., Ltd.), 05 October, 1999 (05.10.99), Claims; Par. Nos. [0016], [0017] (Family: none) | 4,5,6,7,8<br>1<br>2,3 |
| X<br>Y<br>A | JP 10-204323 A (Nissan Motor Co., Ltd.), 04 August, 1998 (04.08.98), Claims; Par. Nos. [0012] to [0029] & US 6110269 A & DE 19802392 A1 | 4,5,6,7,8<br>1<br>2,3 |
| X<br>Y<br>A | WO 99/41322 A1 (Toto Ltd.), 19 August, 1999 (19.08.99), Claims; Par. No. [0069] & JP 2000-531507 A | 4,5,6,7,8<br>1<br>2,3 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>22 July, 2004 (22.07.04) | Date of mailing of the international search report<br>10 August, 2004 (10.08.04) |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/005349

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2003-55580 A (Canon NTC Kabushiki Kaisha),<br>26 February, 2003 (26.02.03),<br>Claims; Par. Nos. [0062], [0063], [0069]<br>(Family: none) | 4,5,6,7,8<br>1,2,3 |
| X<br>A | JP 10-60665 A (Central Glass Co., Ltd.),<br>03 March, 1998 (03.03.98),<br>Claims; Par. Nos. [0009], [0012], [0019]<br>& JP 10-68091 A & US 6071606 A<br>& GB 2316687 A & DE 19736925 A1 | 4,5,6,7,8<br>1,2,3 |
| X<br>A | JP 2000-302441 A (JSR Corp.),<br>31 October, 2000 (31.10.00),<br>Claims; Par. No. [0005]<br>(Family: none) | 4,5,6,7,8<br>1,2,3 |
| X<br>A | JP 2003-13007 A (Nippon Unicar Co., Ltd.),<br>15 January, 2003 (15.01.03),<br>Claims; Par. No. [0024]<br>(Family: none) | 4,5,6,7,8<br>1,2,3 |
| Y<br>A | JP 11-262669 A (Sumitomo Osaka Cement Co., Ltd.),<br>28 September, 1999 (28.09.99),<br>Claims; Par. No. [0069]<br>(Family: none) | 1,4,5,6,7,8<br>2,3 |
| Y<br>A | JP 11-18589 A (Achilles Corp.),<br>26 January, 1999 (26.01.99),<br>Claims; Par. No. [0069]<br>(Family: none) | 1,4,5,6,7,8<br>2,3 |
| Y<br>A | JP 2003-41034 A (Ube-Nitto Kasei Co., Ltd.),<br>13 February, 2003 (13.02.03),<br>Claims<br>(Family: none) | 6,7,8<br>1,2,3,4,5 |
| Y<br>A | JP 2000-336281 A (Ube-Nitto Kasei Co., Ltd.),<br>05 December, 2000 (05.12.00),<br>Claims<br>& EP 1174470 A1 & US 6737145 B1<br>& WO 00/23523 A1 | 6,7,8<br>1,2,3,4,5 |
| P,X<br>P,A | JP 2004-99879 A (JSR Corp.),<br>02 April, 2004 (02.04.04),<br>Claims<br>(Family: none) | 4,5,6,7,8<br>1,2,3 |
| A | JP 10-237353 A (Tao Inc.),<br>08 September, 1998 (08.09.98),<br>Claims<br>(Family: none) | 1-8 |

Form PCT/ISA/210 (continuation of second sheet) (January 2004)